# EUROPEAN PATENT SPECIFICATION

(11) **EP 2 795 542 B1**
(45) Date of publication and mention of the grant of the patent: **02.05.2018**
(21) Application number: 12808831.7
(22) Date of filing: 24.12.2012
(51) Int. Cl.: G06K 19/077

(54) **CHIP CARD AND ASSOCIATED MANUFACTURING METHOD**
CHIPKARTE UND ENTSPRECHENDES HERSTELLUNGSVERFAHREN
CARTE À PUCE ET PROCÉDÉ DE FABRICATION ASSOCIÉ

(30) Priority: 22.12.2011 EP 11306754
(43) Date of publication of application: 29.10.2014
(73) Proprietor: Gemalto SA, 92190 Meudon (FR)
(72) Inventor: OTTOBON, Stéphane, F-92190 Meudon (FR); ODDOU, Laurent, F-92190 Meudon (FR); FROGER, Alexis, F-92190 Meudon (FR); RENOUARD, Jéremy, F-92190 Meudon (FR)
(74) Representative: Cassagne, Philippe M.J.
(86) International application number: PCT/EP2012/076876
(87) International publication number: WO 2013/093116

(56) References cited:
- EP-A1- 2 746 998
- DE-A1- 19 826 428
- DE-A1- 19 921 525
- DE-U1- 29 503 249
- FR-A1- 2 718 549
- FR-A1- 2 783 202
- FR-A1- 2 794 264
- FR-A1- 2 882 175
- FR-A1- 2 885 718

## Description

This invention relates to the area of wireless communication and more particularly smart cards designed to be installed in mobile telephones. Smart cards are generally made up of a fine card body with a rectangular parallelepiped shape, designed to accommodate an integrated circuit chip. In the case of subscriber identity module (SIM) cards or universal integrated circuit (UICC) cards, the format of the card body is standardised, but over time, different formats have been developed, and the format used varies from one telephone to the next. That is why smart card manufacturers need to offer users solutions that supply a smart card that can adapt to all the connectors used in telephones or other mobile devices using SIM cards.
Further, the miniaturisation of electronic components is driving manufacturers to develop ever smaller card formats, also called form factors.

For example, documents FR 2 794 264 A1, FR 2 885 718 A1, FR 2 783 202 A1, FR 2 882 175 A1 and DE 295 03 249 U1 disclose chip cards having a first form factor and comprising a smaller chip card having a second form factor. Thus, while the first SIM cards had an ID-1 format, 85.60 mm long, 53.98 mm wide and 0.82 mm thick, subsequent formats had reduced lengths and widths, as with the 2FF (25 mm long, 15 mm wide, 0.82 mm thick) and 3FF (15 mm long, 12 mm wide, 0.82 mm thick) formats. Today, manufacturers are developing a new form factor, called 4FF, with dimensions that are even smaller, and particularly with reduced thickness.

There is therefore a need to offer a solution that makes it possible to make a smart card that can adapt to the new form factors, for a reduced cost.

Therefore, this invention relates to a smart according to claim 1. In another aspect of this invention, the primary card body comprises at least one second detachable contour, peripheral to the slot and representing at least one third form factor and defining at least one other secondary card body.

In an additional aspect of this invention, the primary card body comprises at least one second detachable contour distinct from the first detachable contour and representing at least one third form factor, the said at least one detachable contour comprising a cavity designed to accommodate the first detachable contour to form a secondary card body.

In an additional aspect of this invention, the said smart card comprises at least one second integrated circuit chip, and the primary card body comprises at least one second slot on its front, designed to accommodate the at least one second integrated circuit chip, the said primary card body also comprising at least one second detachable contour, peripheral to the at least one second slot and representing at least one third form factor, the said at least one second detachable contour defining a secondary card body.

In another aspect of this invention, the second form factor is a form factor of the 4FF type.

In an additional aspect of this invention, the at least one third form factor comprises a form factor of the 3FF or 2FF type.

In a supplementary aspect of this invention, the first form factor is a form factor of the ID-1 type.

In an additional aspect of this invention, the at least one detachable contour is formed by notches located on the front and back of the card body.

In another aspect of this invention, the at least one detachable contour is formed by partly cutting the contour.

In a supplementary aspect of this invention, partial cutting is achieved by punching.

Other characteristics and advantages of the invention will appear in the description below, by reference to the attached drawings, which illustrate a possible embodiment, for information and in a non-limitative manner.

In these drawings:
- figure 1 is a schematic view of a transverse section of a portion of the card body in one embodiment of this invention;
- figure 2 represents a synoptic view of the front of a primary card body in a first embodiment of this invention;
- figure 3 is a schematic view of a transverse section of a portion of the card body of figure 2;
- figure 4 represents a schematic view of the front of a primary card body in a second embodiment of this invention;
- figure 5 represents a schematic view of the front of a primary card body in a third embodiment of this invention;
- figure 6 represents a schematic view of the different steps of the method of manufacturing a smart card according to the embodiments of this invention;
- figure 7 is a schematic view of a transverse section of a smart card in a first embodiment of this invention;

In these figures, the same reference numbers refer to similar elements.

In the description below, the following are generally designated:
- USIM stands for Universal Subscriber Identification Module and is a universal subscriber identification module;
- UICC stands for Universal Integrated Circuit Card and is a universal integrated circuit card;
- The term "thickness" used to designate a card body between its front and back means the largest thickness between the front and back of the card body;
- The term "ID-1" means a form factor defined by the standard ISO 7816;
- The terms "2FF and 3FF" mean a second and a third generation of standardised form factors;
- The term "4FF" means a fourth-generation form factor that is currently being standardised;

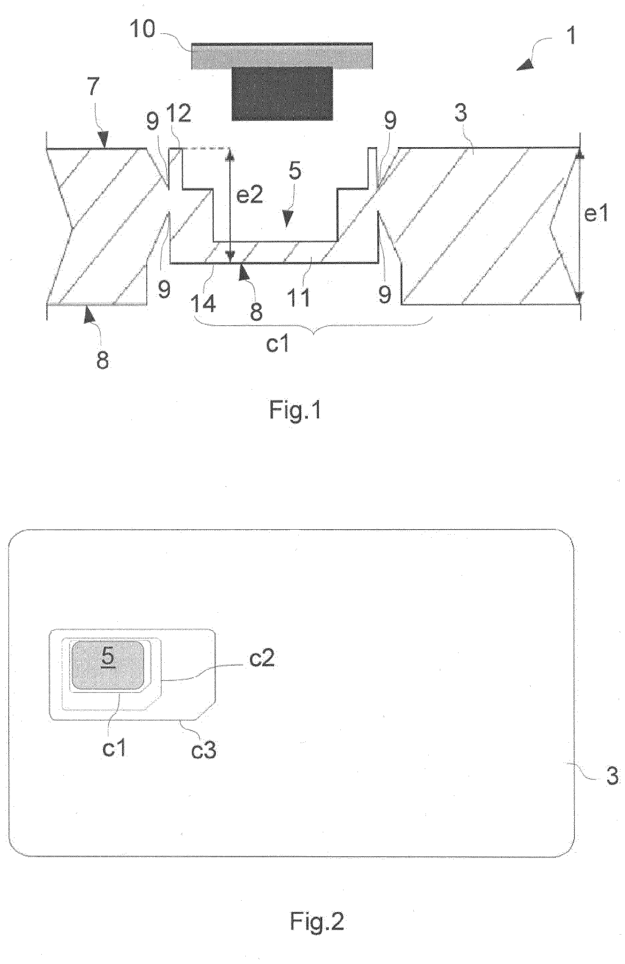

The embodiments of this invention relate to a smart card with a profile having at least two thicknesses corresponding with the thicknesses of two form factors. Figure 1 represents a view of a transverse section of a portion of a smart card 1. The smart card 1 comprises a primary card body 3 in one first form factor with a first thickness e1, between the front 7 and the back 8, and comprises a slot 5 designed to accommodate an integrated circuit chip 10 on one of the sides corresponding with the front 7. The dimensions and positions of the slot 5 are defined by the first form factor. That primary card body 3 also comprises a detachable contour c1, peripheral to the slot 5, corresponding with a second form factor and defining a secondary card body 11. The secondary card body 11 has a second thickness e2, between its front 12, which is the same as the front 7 of the primary card body, and its back 14; the second thickness is smaller than the first thickness e1. The detachable contour c1 is formed by notches 9 located on the front 7 and the back 8 of the primary card body 3. Further, the primary card body 3 can contain additional detachable contours to form secondary card bodies with different form factors. Different embodiments for making a plurality of card bodies with different form factors will be described in greater detail in the description below.

In a first embodiment represented in figure 2, the smart card 1 comprises a primary card body 3 with a card factor of the ID-1 type and a first thickness e1, for example 0.82 mm, and a second thickness e2, for example 0.68 mm, inside a first detachable contour c1 corresponding with a form factor of the type 4FF. The slot 5 is designed to accommodate the integrated circuit chip located within the first detachable contour c1. The primary card body 3 also comprises a second c2 and a third c3 detachable contour corresponding with a 3FF and 2FF form factor respectively, the said detachable contours c2 and c3 being located peripheral to the slot 5. The positions of the detachable contours c2 and c3 in relation to the slot 5 correspond with the specifications given by the standards for the form factors 3FF and 2FF. The different detachable contours are thus peripheral to each other. The form factors of the 2FF and 3FF type have a thickness identical to the ID1 format, and the primary card body 3 is 0.82 mm thick, with the exception of the first detachable contour c1, which is 0.68 mm thick.

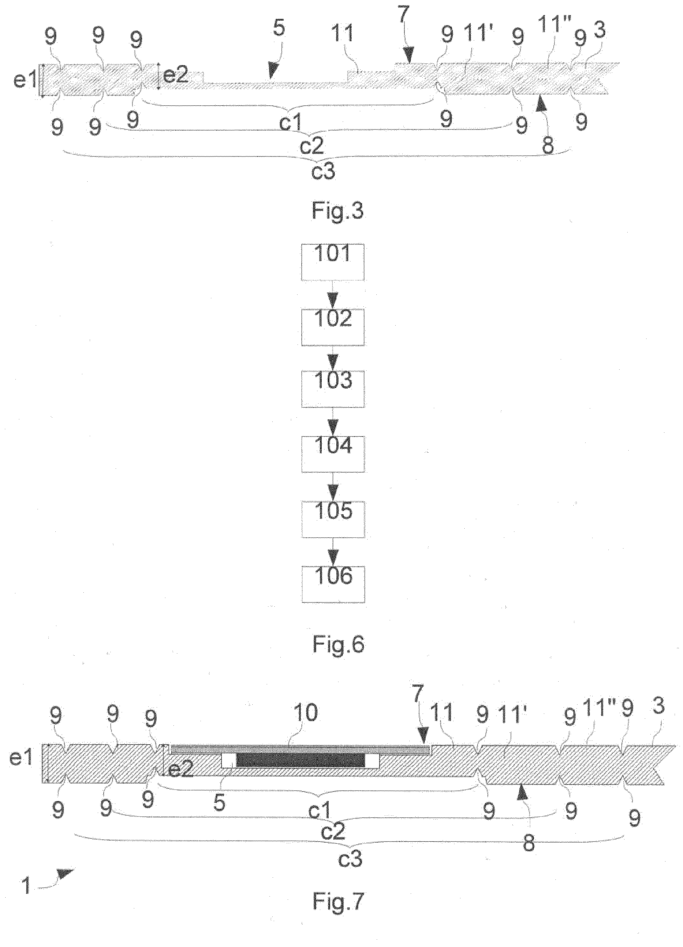

Figure 3 is a view of a transverse section of a portion of the primary card body 3 of figure 2. The detachable contours c1, c2 and c3 are demarcated by scores comprising notches 9. By detaching the contour c1, a secondary card body 11 is obtained with a thickness e2 of 0.68 mm, while by detaching the contour c2 or c3, a secondary card body 11' or 11" is obtained with a thickness of 0.82 mm at its periphery.

Thus, when a user detaches one of the contours of the smart card 1, the card body obtained complies with the form factor corresponding with the detached contour because the length, width and thickness at the periphery of the card body obtained comply with the specifications of the form factor. The cord body obtained in this way can then be inserted in a telephone designed for smart cards in that form factor.

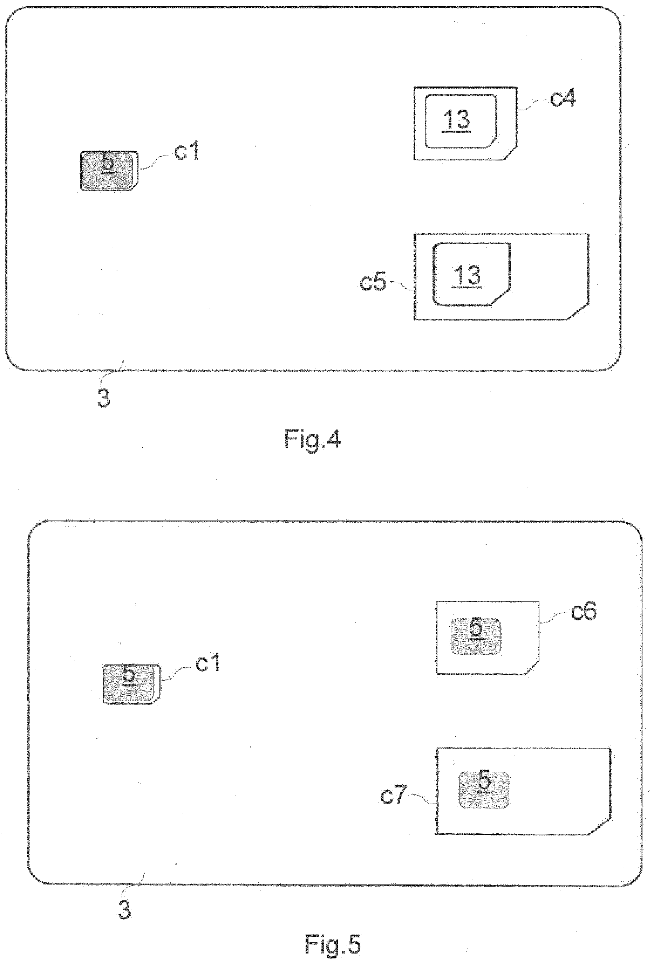

In a second embodiment represented in figure 4, the smart card comprises a primary card body 3 with a form factor of the ID-1 type and a first thickness e1, for example 0.82 mm, and a second thickness e2, for example 0.68 mm, inside a first detachable contour c1 corresponding with a form factor of the 4FF type. The slot 5 is designed to accommodate the integrated circuit chip located within the first detachable contour c1. The primary card body 3 also comprises a second c4 and third c5 detachable contour, which are distinct from each other and distinct from the first detachable contour c1. The second detachable contour c4 and the third detachable contour c5 correspond with a form factor of the 3FF type and the 2FF type respectively, in which a cavity 13 is made to accommodate the detachable contour c1. The dimensions of the cavity 13 thus correspond with the card body dimensions 4FF. Further, the position of the cavity 13 in relation to the second detachable contour c4 or in relation to the third detachable contour c5 is determined so as to obtain a card body of the 3FF type or the 2FF type, when the detachable contour c1 is placed in the cavity 13. Thus, the second and third detachable contours c4 and c5 represent adapters that are used to adapt a card body of the 4FF type to a format of the 3FF or 2FF type.
Thus, by detaching the first detachable contour c1, the user obtains a card body in the 4FF format. If the user needs a card body in the 3FF or 2FF format, they detach the second c4 or third c5 detachable contour and insert the first detachable contour c1 in the cavity 13. The first detachable contour c1 is fixed in the cavity 13 by force mounting or gluing, for example; the cavity 13 may for example comprise an adhesive part.

In a third embodiment represented in figure 5, the smart card comprises a primary card body 3 with a card factor of the ID-1 type and a first thickness e1, for example 0.82 mm, and a second thickness e2, for example 0.68 mm, inside a first detachable contour c1 corresponding with a form factor of the 4FF type. The smart card also comprises a second c6 and a third c7 detachable contour that are distinct from each other and from the first contour c1. The different detachable contours comprise a slot 5 designed to receive an integrated circuit chip. Thus, the smart card comprises three integrated circuit chips, and the user detaches the appropriate contour depending on the required card format or form factor.
The dimensions of the different slots 5 are defined on the basis of the sizes of the integrated circuit chips that are to be placed in the said slots 5. Further, the locations of the slots 5 inside the contours c1, c2 and c3 are defined by the specifications for the 4FF, 3FF and 2FF form factors.

Besides, it must be noted that the invention is not limited to the embodiments described above, but applies to any card body with a first form factor and a first thickness and having at least one detachable contour with a second form factor and a second thickness smaller than the first one. Thus, the primary factor card is not necessarily a card factor of the ID1 type and the number of detachable contours may be different from three. Further, the different detachable contours may have thicknesses that are different from each other and different from the thickness of the primary card body.

The different steps of the process for manufacturing a smart card as described above will now be described in greater detail by reference to figure 6.

The first step 101 is that of making a mould with a cavity for the form factor of the primary card body, that is to say ID-1 in this case. Further, the mould may comprise relief on its back defining the interior of the detachable contours representing a form factor with a thickness smaller than the thickness of the primary card body, the thickness of the relief being the difference in thickness between the form factor of the contour in question and the thickness of the primary card body. In the examples of figures 2, 4 and 5, that would be relief representing the interior of the contour c1 with a thickness of 0.14 mm (0.82-0.68).
² Besides, the mould may also comprise relief on its front representing one or more slots 5 or one or more cavities 13. For example, in the embodiment of figure 2, the relief would represent the slot 5 designed to accommodate the integrated circuit chip 10. For the embodiment in figure 4, the relief would represent the slot 5 designed to accommodate the integrated circuit chip and the cavities 13 and in the case of figure 5, the relief would represent the three slots designed to accommodate an integrated circuit chip.

The second step 102 is that of injection moulding the primary card body with the mould provided by step 101, using mouldable material, such as for example thermoplastic polymer.

The third step 103 is that of unmoulding the card body injected in step 102.

The fourth step 104 is a step that may be optional depending on the mould used in step 101, and is that of machining and milling the card body. That is because if the mould of step 101 does not comprise relief for the slots 5 designed to accommodate an integrated circuit chip, the possible cavities 13 and compensation for the differences in height for the detachable contour or contours with thicknesses smaller than the thickness of the primary card body, then those slots, cavities and differences in height could be made by machining or milling the card.

The fifth step 105 is also a step that may be optional, because scoring may also be made while moulding. If the mould does not provide for scoring, the step 105 is that of scoring the card body to define the detachable contour or contours. Different techniques may be used to make contours:
- making notches on all the contours on one or both sides of the card, as represented in figure 1 and 3,
- partly cutting the contours to obtain local attachment tabs on the contour. The tabs may then be broken easily by a user to separate the detachable contour from the rest of the primary card body,
- combining the two previous techniques. One side of the contour may, for example, comprise notches on one or both sides whilst the other sides of the contour may be cut partly or fully.
Besides, different techniques may be used to score the card body, such as a laser beam, a high-pressure jet or a mechanical punch.

The sixth step 106 corresponds with the assembly of the integrated circuit chip or chips in the slots 5. The assembly may for instance be made by gluing. Figure 7 represents a transverse section of a smart card with a card body according to the embodiment of figure 2. Thus, the integrated circuit chip is placed in the slot 5 and is flush with the front 7 of the card body 3. Further, the integrated circuit chip must be mounted in a specific direction, as the position of the contacts of the integrated circuit chip are standardised.

Thus, the embodiments of this invention make it possible to make a chip card with at least one detachable contour with a thickness that is smaller than the rest of the card body so as to provide a secondary card body with a thickness that is different from the primary card body of the smart card as is the case with the 4FF form factor in relation to older form factors in order to allow adaptation to different form factors, of which at least one has a different thickness.

## Claims

1. A smart card (1) comprising:
- an integrated circuit chip (10),
- a primary card body (3) with a first form factor, comprising a slot (5) on the front (7) designed to accommodate the integrated circuit chip (10), wherein the said primary card body (3) also comprises a detachable contour (c1), peripheral to the slot (5), which represents another form factor and defines a secondary card body (11),
said primary card body (3) having a first thickness (e1), between the front (7) and a back (8), and said secondary card body (11) has a second thickness (e2), between a front (7, 12) and a back (14), which is smaller than the first thickness (e1), **characterized in that** said detachable contour (c1) is demarcated by either scores comprising notches (9) on one or both sides of the smart card, or attachment tabs on the contour that can be broken easily by a user to separate the detachable contour (c1) from the rest of the primary card body (3).

2. A smart card (1) according to claim 1, wherein the primary card body (3) comprises at least one second detachable contour (c2, c3), peripheral to the slot (5) and representing at least one third form factor and defining at least one other secondary card body (11', 11").

3. A smart card (1) according to claim 1, wherein the primary card body (3) comprises at least one second detachable contour (c4, c5) distinct from the first detachable contour and representing at least one third form factor, the said at least one detachable contour (c4, c5) comprising a cavity (13) designed to accommodate the first detachable contour (c1) to form a secondary card body.

4. A smart card (1) according to claim 1, wherein the said smart card (1) comprises at least one second integrated circuit chip (10), and the primary card body (3) comprises at least one second slot (5) on its front (7), designed to accommodate the at least one second integrated circuit chip (10), the said primary card body (3) also comprising at least one second detachable contour (c6, c7), peripheral to the at least one second slot (5) and representing at least one third form factor, the said at least one second detachable contour (c6, c7) defining a secondary card body.

5. A smart card (1) according to claim 1, wherein the second form factor is a form factor of the 4FF type.

6. A smart card (1) according to any of claims 2 to 4, wherein the at least one third form factor comprises a form factor of the 3FF type.

7. A smart card (1) according to any of claims 2 to 4, wherein the at least one third form factor comprises a form factor of the 2FF type.

8. A smart card (1) according to any of the foregoing claims, wherein the first form factor is a form factor of the ID-1 type.

9. A smart card (1) according to any of the foregoing claims, wherein the at least one detachable contour is formed by notches (9) located on the front (7) and back (8) of the card body.

10. A smart card (1) according to any of the foregoing claims, wherein the cut is formed by a partial cut of the contour.

11. A smart card (1) according to claim 10, wherein the partial cut of the contour is formed by punching.

## Patentansprüche

1. Chipkarte (1), umfassend:
- einen integrierten Chipschaltkreis (10),
- einen primären Kartenkörper (3) mit einem ersten Formfaktor, umfassend eine Aussparung (5) auf der Vorderseite (7) zur Aufnahme des integrierten Chipschaltkreises (10), wobei der primäre Kartenkörper (3) zudem einen heraustrennbaren Umriss (c1) umfasst, der sich außerhalb der Aussparung (5) befindet, der einen weiteren Formfaktor darstellt und einen sekundären Kartenkörper (11) definiert,
Der primäre Kartenkörper (3) hat eine erste Dicke (e1) zwischen der Vorderseite (7) und einer Rückseite (8), und der zweite Kartenkörper (11) hat eine zweite Dicke (e2) zwischen einer Vorderseite (7, 12) und einer Rückseite (14), die kleiner als die erste Dicke (e1) ist, **dadurch gekennzeichnet, dass** dieser heraustrennbare Umriss (c1) entweder durch Punkte einschließlich durch Kerben (9) auf einer bzw. auf beiden Seiten der Chipkarte oder durch Befestigungslaschen am Rand abgegrenzt wird, die von einem Nutzer leicht ausgebrochen werden können, um den heraustrennbaren Umriss (e1) vom Rest des primären Kartenkörpers (3) abzutrennen.

2. Chipkarte (1) nach Anspruch 1, wobei der primäre Kartenkörper (3) mindestens einen zweiten heraustrennbaren Umriss (c2, c3) umfasst, der sich außerhalb der Aussparung (5) befindet und mindestens einen dritten Formfaktor darstellt und mindestens einen weiteren sekundären Kartenkörper (11', 11") definiert.

3. Chipkarte (1) nach Anspruch 1, wobei der primäre Kartenkörper (3) mindestens einen zweiten heraustrennbaren Umriss (c4, c5) umfasst, der sich vom ersten heraustrennbaren Umriss unterscheidet und mindestens einen dritten Formfaktor darstellt, wobei dieser mindestens eine heraustrennbare Umriss (c4, c5) einen Hohlraum (13) zur Aufnahme des ersten heraustrennbaren Umrisses (c1) umfasst, um einen sekundären Kartenkörper zu bilden.

4. Chipkarte (1) nach Anspruch 1, wobei diese Chipkarte (1) mindestens einen zweiten integrierten Chipschaltkreis (10) umfasst und der primäre Kartenkörper (3) mindestens eine zweite Aussparung (5) auf seiner Vorderseite (7) zur Aufnahme von mindestens einem zweiten integrierten Chipschaltkreis (10) umfasst, wobei dieser primäre Kartenkörper (3) zudem mindestens einen zweiten heraustrennbaren Umriss (c6, c7) umfasst, der sich außerhalb der mindestens einen sekundären Aussparung (5) befindet und mindestens einen dritten Formfaktor darstellt, wobei dieser mindestens eine zweite heraustrennbare Umriss (c6, c7) einen sekundären Kartenkörper definiert.

5. Chipkarte (1) nach Anspruch 1, wobei der zweite Formfaktor ein Formfaktor vom Typ 4FF ist.

6. Chipkarte (1) nach einem der Ansprüche 2 bis 4, wobei der mindestens eine dritte Formfaktor einen Formfaktor vom Typ 3FF umfasst.

7. Chipkarte (1) nach einem der Ansprüche 2 bis 4, wobei der mindestens eine dritte Formfaktor einen Formfaktor vom Typ 2FF umfasst.

8. Chipkarte (1) nach einem der vorhergehenden Ansprüche, wobei der erste Formfaktor ein Formfaktor vom Typ ID-1 ist.

9. Chipkarte (1) nach einem der vorhergehenden Ansprüche, wobei der mindestens eine heraustrennbare Umriss durch Kerben (9) gebildet wird, die sich auf der Vorderseite (7) und der Rückseite (8) des Kartenkörpers befinden.

10. Chipkarte (1) nach einem der vorhergehenden Ansprüche, wobei der Schnitt durch einen Partialschnitt des Umrisses gebildet wird.

11. Chipkarte (1) nach Anspruch 10, wobei der Partialschnitt durch Stanzen geformt wird.

## Revendications

1. Carte à puce (1) comportant :
- une puce à circuit intégré (10),
- un corps de carte primaire (3) avec un premier facteur de forme et comprenant un logement (5) sur une face avant (7), destiné à recevoir la puce à circuit intégré (10), ledit corps de carte primaire (3) comprenant également un contour détachable (c1), périphérique au logement (5), correspondant à un autre facteur de forme et définissant un corps de carte secondaire (11),
ledit corps de carte primaire (3) possédant une première épaisseur (e1), entre la face avant (7) et une face arrière (8), et ledit corps de carte secondaire (11) possédant une deuxième épaisseur (e2), entre une face avant (7, 12) et une face arrière (14), inférieure à la première épaisseur (e1), **caractérisée en ce que** ledit contour détachable (c1) se démarque soit par des encoches (9) situées sur l'une des faces ou sur les deux faces de la carte à puce, soit par des pattes de fixation situées sur le contour qui peuvent être facilement rompues par un utilisateur afin de séparer le contour détachable (e1) du reste du corps de carte primaire (3).

2. Carte à puce (1) selon la revendication 1 dans laquelle le corps de carte primaire (3) comprend au moins un deuxième contour détachable (c2, c3) périphérique au logement (5) et correspondant à au moins un troisième facteur de forme et définissant au moins un autre corps de carte secondaire (11', 11 ").

3. Carte à puce (1) selon la revendication 1 dans laquelle le corps de carte primaire (3) comprend au moins un deuxième contour détachable (c4, c5) distinct du premier contour détachable et correspondant à au moins un troisième facteur de forme, ledit au moins un contour détachable (c4, c5) comprenant une cavité (13) destinée à recevoir le premier contour détachable (c1) pour former un corps de carte secondaire.

4. Carte à puce (1) selon la revendication 1 dans laquelle ladite carte à puce (1) comprend au moins une deuxième puce à circuit intégré (10) et dans laquelle le corps de carte primaire (3) comprend au moins un deuxième logement (5), sur sa face avant (7), destiné à recevoir la au moins une deuxième puce à circuit intégré (10), ledit corps de carte primaire (3) comprenant également au moins un deuxième contour détachable (c6, c7), périphérique à la au moins un deuxième logement (5) et correspondant à au moins un troisième facteur de forme, ledit au moins un deuxième contour détachable (c6, c7) définissant un corps de carte secondaire.

5. Carte à puce (1) selon la revendication 1 dans laquelle le deuxième facteur de forme correspond à un facteur de forme de type 4FF.

6. Carte à puce (1) selon l'une des revendications 2 à 4 dans laquelle le au moins un troisième facteur de forme comprend un facteur de forme de type 3FF.

7. Carte à puce (1) selon l'une des revendications 2 à 4 dans laquelle le au moins un troisième facteur de forme comprend un facteur de forme de type 2FF.

8. Carte à puce (1) selon l'une des revendications précédentes dans laquelle le premier facteur de forme correspond à un facteur de forme de type ID-1.

9. Carte à puce (1) selon l'une des revendications précédentes dans laquelle le au moins un contour détachable est formé par des encoches (9) situées sur la face avant (7) et la face arrière (8) du corps de carte.

10. Carte à puce (1) selon l'une des revendications précédentes dans laquelle la découpe est formée par une découpe partielle du contour.

11. Carte à puce (1) selon la revendication 10 dans laquelle la découpe partielle du contour est formée par poinçonnage.
